# EUROPEAN PATENT APPLICATION

(11) **EP 1 936 959 A2**
(43) Date of publication of application: **25.06.2008**
(21) Application number: 07122159.2
(22) Date of filing: 03.12.2007
(51) Int. Cl.: H04N 5/44

(54) **Method and apparatus for changing channel**

(30) Priority: 21.12.2006 KR 20060131847; 03.01.2007 KR 20070000794
(71) Applicant: Samsung Electronics Co., Ltd., Suwon-si Gyeonggi-do 443-742 (KR)
(72) Inventor: Kim, Mun-Jo, Gwonseon-gu, Suwon-si Gyeonggi-do (KR); Choi, Hyok-Sung, 801-101, Gyeonggi-do (KR); Lee, Sang-Kwon, Yeongtong-gu, Suwon-si 503-1303, Gyeonggi-do (KR); Jeon, Seung-Hun, 301-603, Seoul (KR)
(74) Representative: Grootscholten, Johannes A.M.

(57) **Abstract**

A channel-changing method is disclosed. The method includes receiving broadcast signals consisting of multiple packets, extracting frames using packet-identification information on the packets, and storing the extracted frames by channels, and outputting frames corresponding to the channel requested by a user among the stored frame.

## Description

### CROSS-REFERENCE TO RELATED APPLICATION

This application is based on and claims priority from Korean Patent Application Nos. 10-2006-0131847 filed on December 21, 2006 and 10-2007-0000794 filed on January 3, 2007 in the Korean Intellectual Property Office, the disclosures of which are incorporated herein in their entirety by reference.

### BACKGROUND

### 1. Field of the Invention

Methods and apparatuses consistent with the present invention relate to changing a channel. More particularly, the present invention relates to a method and apparatus for quickly displaying the image of a requested channel according to the channel-change request.

### 2. Description of the Related Art

Along with the development of communication and image-processing technologies, digital TVs are now widely used, and digital TVs are replacing existing analog TVs.

Though digital TVs provide clear images and various additional information, it takes longer to change the channel compared with analog TVs, which is inconvenient. When a tuner mounted on a digital TV receives a request to change the channel, it takes time to tune to the frequency band for the requested channel, and even if the tuning is completed, for example, in the case where the group of pictures (GOP) consists of an I-frame, a B-frame, and a P-frame, if the channel is changed in the first step of the GOP starting from an I-frame, the decoding can be promptly performed, but if the channel is changed at the middle step of the GOP, the images of the new channel are not displayed until a new GOP is started. That is, there is a delay.

In order to overcome this problem, a digital TV having a plurality of tuners has been introduced. Here, broadcast signals transmitted through multiple channels are inputted through a plurality of tuners, and when there is a request to change the channel, the tuner corresponding to the requested channel is selected, thereby reducing the tuning time.

However, even in the case of such a digital TV, when receiving images consisting of an I-frame, a B-frame and a P-frame as in the MPEG-2, it still takes time to reach an I-frame. Further, having a plurality of tuners would complicate the structure of a digital TV, thereby raising the manufacturing cost.

Further, recently, an Internet protocol television (IPTV) service has been introduced, which provides information, video content, and broadcasting to a television set.

The IPTV is similar to terrestrial broadcast TV, cable broadcast TV and satellite broadcast TV in that it provides broadcast content such as video, but it is different in that it is bidirectional, and provides broadcast content via the Internet.

However, even in the case of the IPTV, because a user may want to frequently change the channel as digital TVs, there is a need to be able to quickly change the channel and display the images of the new channel.

### SUMMARY

An object of the present invention is to provide an apparatus and method for quickly changing the channel by having a plurality of buffers and storing frames constituting broadcast content by channels in each of the buffers.

The present invention will not be limited to the technical objects described above. Other objects not described herein will be more definitely understood by those in the art from the following detailed description.

According to an exemplary embodiment of the present invention, there is provided a channel-changing method including receiving broadcast signals consisting of multiple packets, extracting frames using packet-identification information on the packets, and storing the extracted frames by channels, and outputting frames corresponding to the channel requested by a user among the stored frames.

According to an exemplary embodiment of the present invention, there is provided a channel-changing method including receiving a channel-change request from a user, outputting the stored frames on the requested channel, extracting packet-identification information of the program for the lower or upper channel of the requested channel, extracting frames on broadcast content corresponding to the extracted packet-identification information, and storing the extracted frames.

According to an exemplary embodiment of the present invention, there is provided a channel-changing apparatus including a packet-receiving module that receives broadcast signals consisting of multiple packets, a frame-extracting module that extracts frames using packet-identification information on the packets, a frame-storage module that stores the extracted frames by channels, and a display module that outputs frames corresponding to the channel requested by a user among the stored frames.

According to an exemplary embodiment of the present invention, there is provided a channel-changing apparatus including a user-input module that receives a channel-change request from a user, a display module that outputs the stored frames on the requested channel, an information-extracting module that extracts packet-identification information of the program on the lower or upper channel of the requested channel, a frame-extracting module that extracts frames on the broadcast content corresponding to the extracted packet-identification information, and a frame-storage module that stores the extracted frames.

According to an exemplary embodiment of the present invention, there is provided a channel-changing apparatus including a channel-change-control module that controls the operation of a first mode that stores frames constituting broadcast content of the lower channel and the upper channel of the current channel while outputting broadcast content of the current channel, and a second mode that stores frames constituting broadcast content of the lower or upper channel of the requested channel while outputting the stored frames on the channel requested by a user, and a user-input module that receives a request from the user.

According to an exemplary embodiment of the present invention, there is provided a channel-changing apparatus including a frame-extracting means that extracts frames that express broadcast content by channels from broadcast signals consisting of multiple packets, a plurality of buffers that store the extracted frames by channels, a decoding means that decodes frames stored in a random buffer among a plurality of buffers, and a display screen that outputs the decoded frames.

According to an exemplary embodiment of the present invention, there is provided a channel-changing method including receiving number-key information for changing a channel from a user, storing frames of a plurality of channels corresponding to the received number-key information by channels, determining a new channel number based on the received at least one set of number-key information, and decoding the stored frames in the determined new channel number, and outputting the decoded frames.

According to an exemplary embodiment of the present invention, there is provided a channel-changing method including receiving broadcast signals consisting of multiple packets, extracting frames of channels corresponding to the contact of a channel-changing means using packet-identification information of the packet, and storing the extracted frames.

According to an exemplary embodiment of the present invention, there is provided a channel-changing method including receiving broadcast signals, extracting frames of a channel corresponding to the contact of a channel-changing means among the received broadcast signals, and storing the extracted frames.

According to an exemplary embodiment of the present invention, there is provided a channel-changing method including sensing the contact of a channel-changing means, storing frames of a channel corresponding to the sensed contact, and outputting the stored frames by the selection of the contacted channel-changing means.

According to an exemplary embodiment of the present invention, there is provided a channel-changing apparatus including a packet-receiving module that receives broadcast signals consisting of multiple packets, a frame-extracting module that extracts frames of a channel corresponding to the contact of a channel-changing means using packet-identification information of the packets, and a frame-storage module that stores the extracted frames.

According to an exemplary embodiment of the present invention, there is provided a channel-changing apparatus including a frame-extracting module that extracts frames of a channel corresponding to the contact of a channel-changing means among the received broadcast signals, and a frame-storage module that stores the extracted frames.

According to an exemplary embodiment of the present invention, there is provided a channel-changing apparatus including a channel-change-control module that controls the operation of a first mode that stores frames constituting broadcast content of the lower or upper channel of the current channel corresponding to the contact of a channel-changing means while outputting broadcast content of the current content, and a second mode that outputs the stored frames by the selection of the contacted channel-changing means, and a user-input module that receives information on the contact of the channel-changing means.

### BRIEF DESCRIPTION OF THE DRAWINGS

The above and other features and advantages of the present invention will become apparent by describing in detail preferred embodiments thereof with reference to the attached drawings in which:
FIG. 1 illustrates the basic concept of changing a channel.
FIG. 2 is a block diagram illustrating the structure of an apparatus for changing a channel according to an exemplary embodiment of the present invention.
FIG. 3 is a flowchart illustrating the operation of a first mode according to an exemplary embodiment of the present invention.
FIG. 4 is a flowchart illustrating the operation of a second mode according to an exemplary embodiment of the present invention.
FIGS. 5A to 5C illustrate the connection between a buffer storing frames and a decoder according to the present invention.
FIGS. 6A to 6E illustrate a method of storing broadcast content by channels by the input of number keys according to an exemplary embodiment of the present invention.
FIG. 7 illustrates the basic concept of changing a channel according to an exemplary embodiment of the present invention.
FIG. 8 is a block diagram illustrating the structure of an apparatus for changing a channel according to an exemplary embodiment of the present invention.
FIGS. 9A to 9B illustrate a remote controller according to an exemplary embodiment of the present invention.
FIG. 10 is a flowchart illustrating the operation of a first mode according to an exemplary embodiment of the present invention.
FIG. 11 is a flowchart illustrating the operation of a second mode according to an exemplary embodiment of the present invention.
FIGS. 12A to 12B illustrate the connection between a buffer storing frames and a decoder according to an exemplary embodiment of the present invention.

### DETAILED DESCRIPTION OF THE INVENTION

Exemplary embodiments of the present invention will be described in detail with reference to the accompanying drawings.

The present invention may be understood more readily by reference to the following detailed description of exemplary embodiments and the accompanying drawings. The present invention may, however, be embodied in many different forms and should not be construed as being limited to the exemplary embodiments set forth herein. Rather, these embodiments are provided so that this disclosure will be thorough and complete and will fully convey the concept of the invention to those skilled in the art, and the present invention will only be defined by the appended claims.

The present invention is described hereinafter with reference to flowchart illustrations of user interfaces, methods, and computer program products according to embodiments of the invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded into a computer or other programmable data processing apparatus to cause a series of operational steps to be performed in the computer or other programmable apparatus to produce a computer implemented process such that the instructions that execute on the computer or other programmable apparatus provide steps for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in reverse order, depending upon the functionality involved.

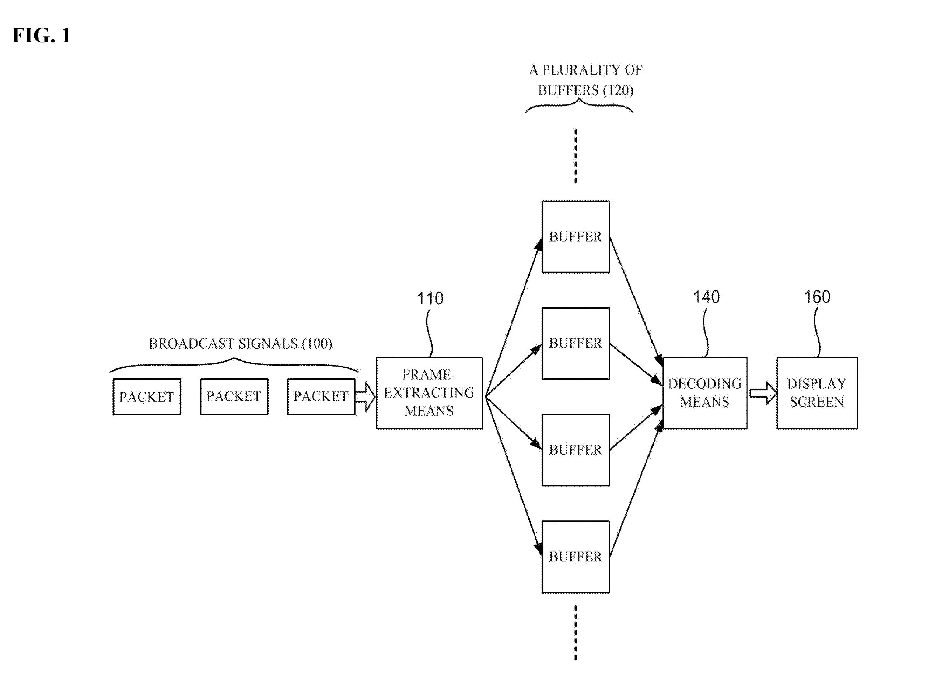

FIG. 1 illustrates the basic concept of changing a channel.

When a broadcast signal 100 consisting of multiple packets is received, a frame-extracting means 110 extracts program information on each broadcast program from the received packets. Then, frames constituting the program are stored in a plurality of buffers 120 by programs or by channels where programs are provided. Here, in the case where the broadcast signal 100 uses the MPEG-2. Further, it is preferable that frames stored in a plurality of buffers 120 are I-frames or P-frames, and all frames for the program viewed by a user are stored in one of the buffers, and are transmitted to a decoding means 140 and are outputted through a display screen 160.

Here, in the case where a user wants to view another program, that is, a user wants to change the channel, the decoding means 140 promptly decodes frames stored in the channel selected by the user and the connected buffer, and provides the decoded frames to the user through the display screen 160.

Hence, it is possible to quickly change the channel by storing broadcasting frames in advance not only for the channel currently being viewed by the user, but also for other channels.

Here, buffers as many as broadcasting channels can be prepared. For explanatory convenience, it is assumed that a plurality of buffers 120 consist of a buffer (hereinafter called a "first buffer") for a channel currently being viewed by a user (hereinafter called a "current channel"), a buffer (hereinafter called a "second buffer") for a channel prior to the current channel (hereinafter called a "lower channel"), and a buffer (hereinafter called a "third buffer") for a channel after the current channel (hereinafter called an "upper channel").

For example, in the case where broadcasting channels are 6, 7, 9 and 11, if a user is currently viewing channel 9, the lower channel is 7, and the upper channel is 11.

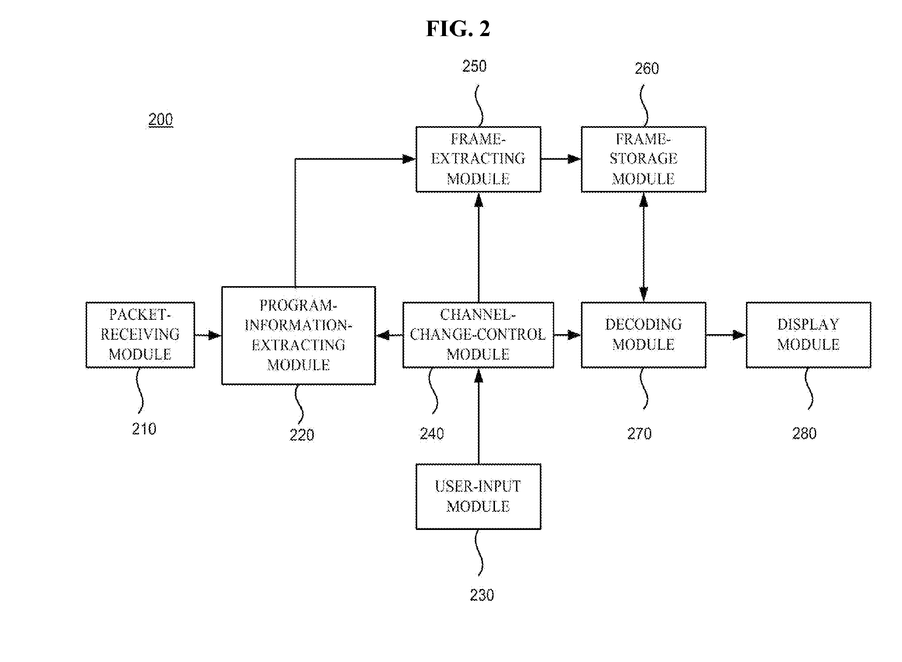

FIG. 2 is a block diagram illustrating the structure of an apparatus for changing a channel according to an exemplary embodiment of the present invention.

Referring to FIG. 2, an apparatus for changing a channel 200 includes a packet-receiving module 210, a program-information-extracting module 220, a user-input module 230, a channel-change-control module 240, a frame-extracting module 250, a frame-storage module 260, a decoding module 270, and a display module 280.

The packet-receiving module 210 receives a broadcast signal consisting of multiple packets. Here, the received broadcast signal supports MPEG-2.

The program-information-extracting module 220 extracts program information of the current channel, the lower channel and the upper channel based on the user's channel selection and packet-identification information identifying each packet.

The user-input module 230 receives an input of the channel selection from the user.

The channel-change-control module 240 quickly changes the channel by controlling the program-information-extracting module 220, the decoding module 270, and the frame-extracting module 250 according to the channel selection by the user.

The frame-extracting module 250 extracts frames constituting broadcast content corresponding to the extracted program information. Here, in the case of the lower channel and the upper channel, the frame-extracting module 250 extracts an I-frame and a P-frame (hereinafter called "I-P frames") or two P-frames (hereinafter called "P-P frames"), respectively.

The frame-storage module 260 includes a first buffer, a second buffer, and a third buffer, and stores frames extracted by the frame-extracting module 250 in the corresponding buffer.

The decoding module 270 decodes frames stored in the frame-storage module 260, and the display module 280 outputs the decoded frames.

Further, the operating mode of the channel-changing apparatus 200 can be divided into a first mode representing the operation before the change of the channel and a second mode representing the operation when the channel is changed. If the channel-changing apparatus receives a command to change the channel from the user while operating in the first mode, the mode is changed into the second mode, and after the operation is performed according to the second mode, the mode is returned to the first mode.

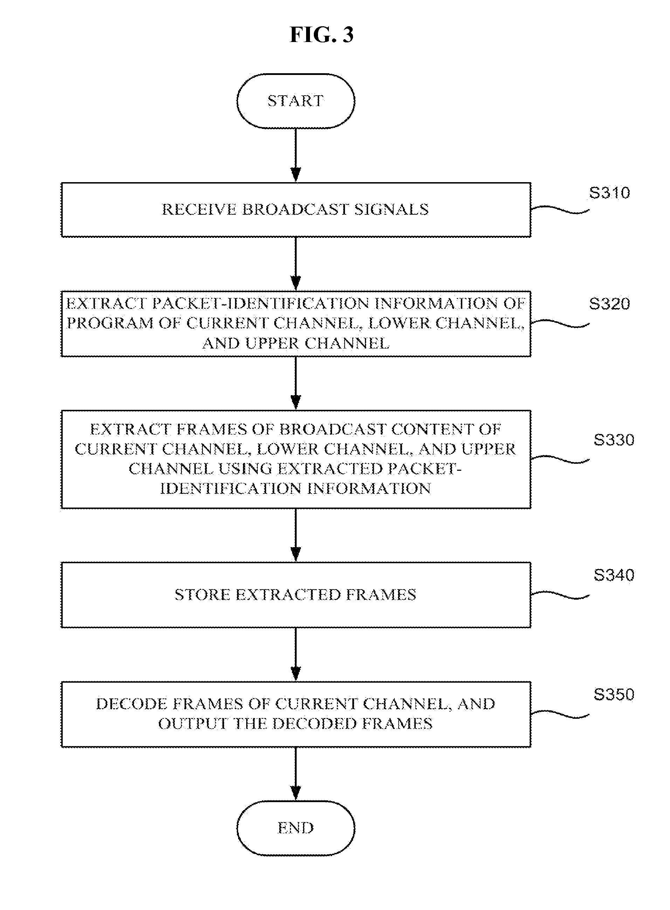

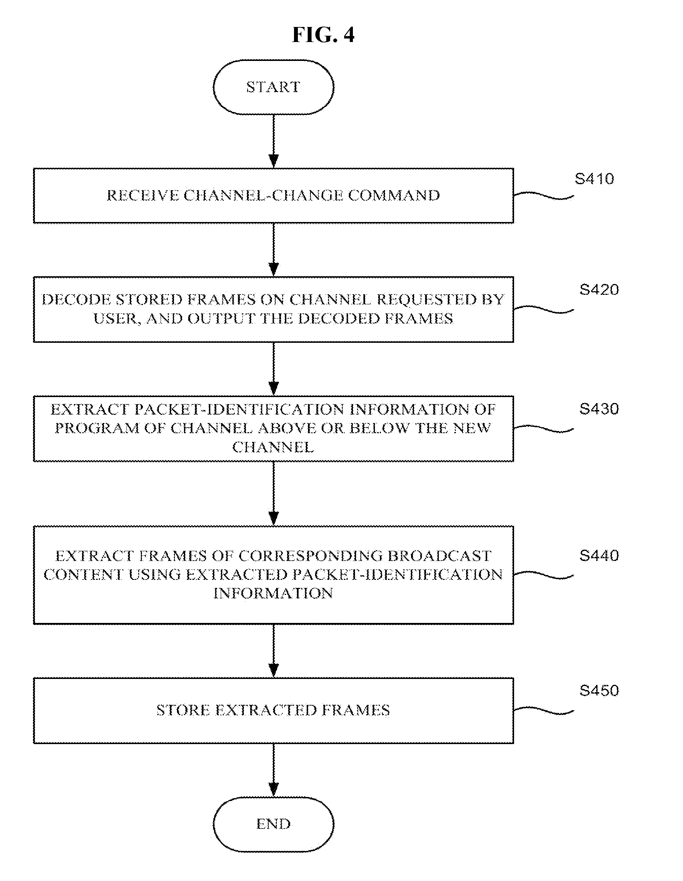

Hereinafter, the operation between modules constituting the channel-changing apparatus 200 illustrated in FIG. 2 will be described in detail with reference to flowcharts illustrated in FIGS. 3 and 4.

FIG. 3 is a flowchart illustrating the operation of a first mode according to an exemplary embodiment of the present invention.

First, the packet-receiving module 210 receives a broadcast signal consisting of a plurality of packets S310. Here, each packet includes packet-identification information that distinguishes the packet from other packets. In the case of a broadcasting stream transmitted in MPEG-2 format, the packet-identification information corresponds to the PID.

The program-information-extracting module 220 extracts the packet-identification information of the program for the current channel, the lower channel, and the upper channel S320, and the frame-extracting module 250 extracts frames for broadcast content in the current channel, the lower channel, and the upper channel using the extracted packet-identification information S330. Here, the packet-identification information for each of sets of broadcast content can be obtained through the program allocation table (PAT) and the program map table (PMT) specified in MPEG-2.

For example, if the packet-identification information of the packet received by the packet-receiving module 210, that is, the PID value is 0, the received packet represents the packet having the PAT information. Hence, the program-information-extracting module 220 can obtain the PID of the program being broadcast in the current channel, the lower channel, and the upper channel.

Further, in the case where the PID information of the received packet is the program PID for the current channel, the lower channel, and the upper channel, the PID information of the elementary stream (ES) necessary for each program can be obtained through the PMT PID information. Here, the ES includes video or audio information.

The frame-extracting module 250 extracts only I-P frames or P-P frames among frames constituting broadcast content because the decoding can be performed only with I-P frames or P-P frames.

Frames extracted by the frame-extracting module 250 are stored in the frame-storage module 260 S340, and the frame for the current channel is stored in a first buffer, the frame for the lower channel is stored in a second buffer, and the frame for the upper channel is stored in a third buffer.

The frame for the current channel among stored frames is decoded by the decoding module 270, and is outputted through the display module 280. Further, I-P frames and P-P frames extracted by the frame-extracting module 250 are updated and stored in the second buffer and the third buffer. Here, frames stored in the second buffer and the third buffer can be decoded in advance by the decoding module 270 in order to be stored.

FIG. 4 is a flowchart illustrating the operation of a second mode according to an exemplary embodiment of the present invention.

First, the user-input module 230 receives a channel-change command from a user S410. If a user sends a request to change to the upper channel or the lower channel using a channel-change-input means (e.g., an upper button and a lower button for changing the channel) included in an infrared remote controller, the user-input module 230 receives infrared (IR) signals via an IR module corresponding to the infrared remote controller, and transmits information for the command to the channel-change-control module 240.

Then, the channel-change-control module 240 allows the decoding module to decode frames stored in the frame-storage module 260 for the requested channel, thereby allowing the display module 280 to output the decoded frames S420.

For example, in the case where a user sends a request to change to the lower channel, because I-P frames or P-P frames constituting broadcast content in the lower channel have been stored in the second buffer in the frame-storage module 260, the decoding module 270 promptly decodes frames stored in the second buffer in response to the channel-change command by the user, and outputs the decoded frames through the display module 280.

In the case where frames stored in the second buffer and the third buffer have been already decoded, the decoding process by the decoding module 270 is omitted, and the decoded frames stored in the second buffer are outputted through the display module 280, whereby images in the new channel can be quickly provided to the user.

The program-information-extracting module 220 extracts S430 packet-identification information of the program for the lower or upper channel of the channel changed by the channel-change information transmitted by the channel-change-control module 240 S430.

For example, in the case where the broadcasting channel is 6, 7, 9, and 11, while the user is viewing channel 9, if the channel is changed to 7, the program-information-extracting module 220 extracts packet-identification information of the program for channel 6, the lower change of the new channel 7. In the case of the packet-identification information of channel 9, the upper channel of the new channel 7, the packet-identification is extracted by the program-information-extracting module 220 before the channel is changed, and in the case of channel 11, the packet-identification information is extracted before the channel is changed, but the packet-identification information for channel 11 is not extracted after the channel is changed.

In the case where the user changes the current channel to the upper channel, the packet-identification information for the upper channel of the new channel can be extracted according to the aforementioned method.

The frame-extracting module 250 extracts frames for the broadcast content using the extracted packet-identification information S440, and the extracted frames are stored in the corresponding buffer, respectively S450.

Here, the buffer where frames for the new channel are stored becomes the first buffer, the buffer where frames for the lower channel of the new channel are stored becomes the second buffer, and the buffer where frames for the upper channel of the new channel becomes the third buffer.

As mentioned above, all frames constituting broadcast content are stored in the first buffer, and after frames stored in the first buffer are decoded by the decoding module 270, the decoded frames are outputted through the display module 280.

I-I frames or P-P frames extracted by the frame-extracting module250 are updated and stored in the second buffer and the third buffer. Here, frames stored in the second buffer and the third buffer can be decoded by the decoding module, and can then be stored.

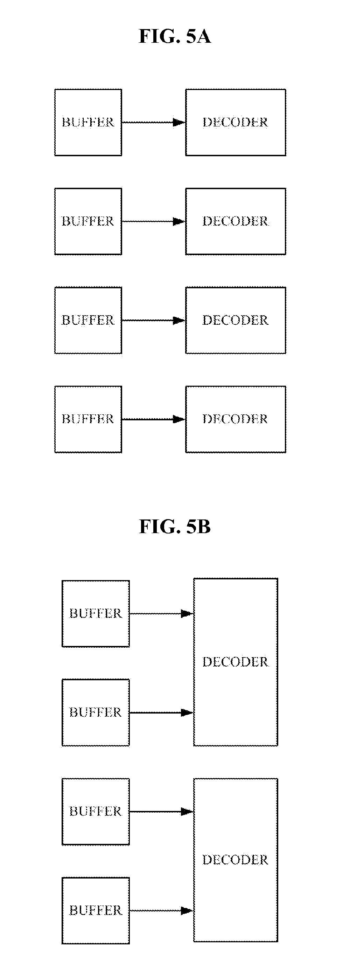

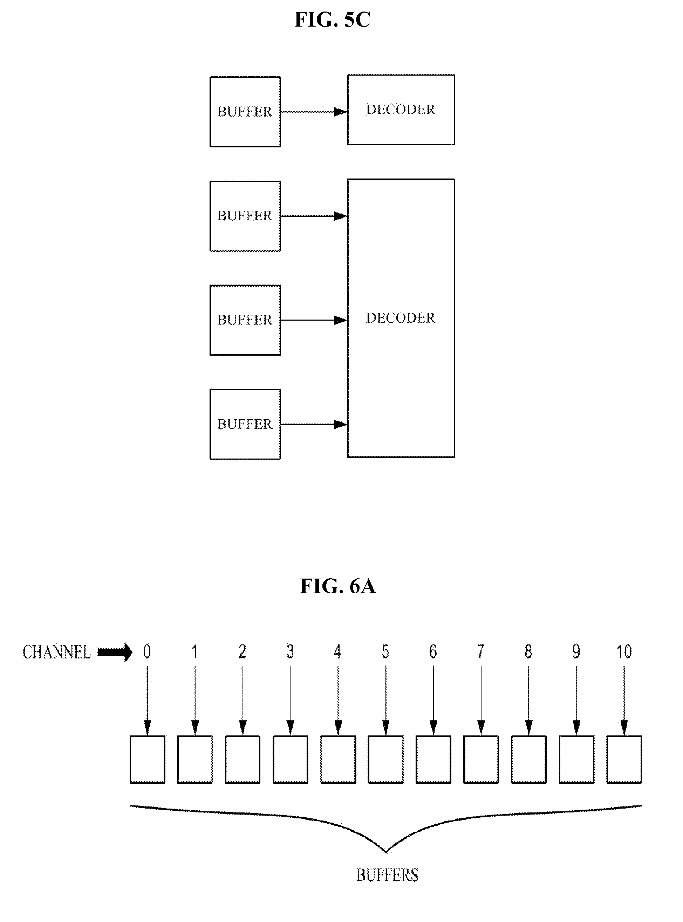

Further, the decoding module 270 illustrated in FIG. 2 can include multiple decoders, and broadcast content in the current channel as well as in other channels can be replayed in the screen provided by the display module 260 through the connection between multiple decoders and multiple buffers stored in the frame-storage module 260. Here, the user can simultaneously enjoy content being broadcast in several channels. FIGS. 5A to 5C illustrate the connection between buffers and decoders.

Further, as illustrated above, the user can change the channel by pushing the upper or lower button for changing the channel and inputting the number key of the remote controller, which is illustrated in FIGS. 6A to 6E.

Referring to FIG. 6A, at the initial step, that is, before the user inputs the number key for changing the channel, broadcasting-content frames for channels 0 to 10 are stored in 11 buffers. Here, before the user inputs the number key, frames for the channel are updated to new frames and are stored. Each of the buffers can be distinguished not only physically, but also logically, and it is preferable that frames stored in each of the buffers are I-frames or P-frames.

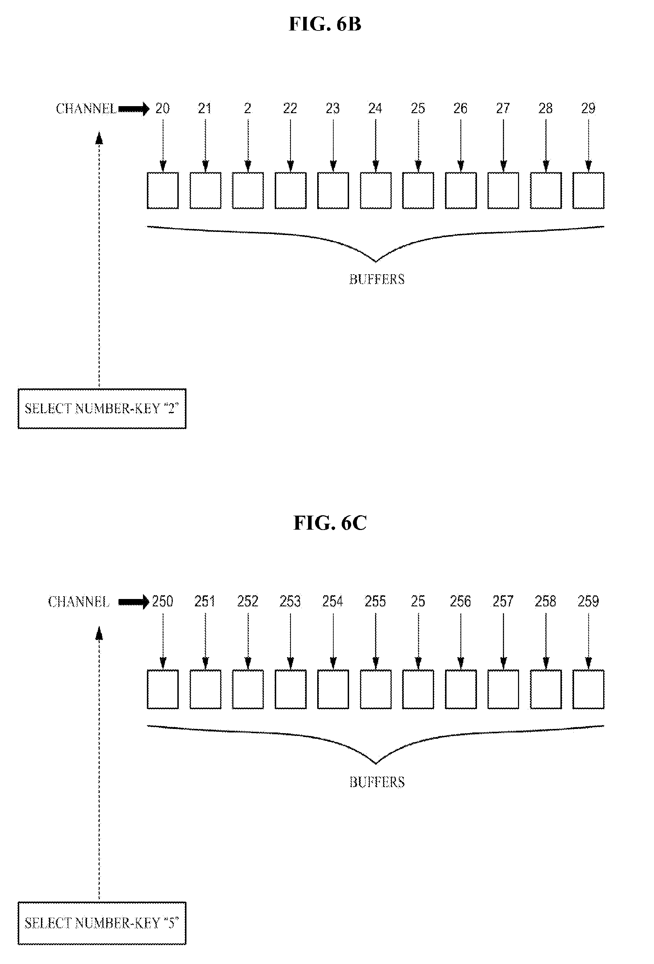

If the user selects the number key "2", the user-input module 230 transmits the selected number-key information to the channel-change-control module 240, and the channel-change-control module 240 allows the program-information-extracting module 220 to extract program information for channel 2 and channels 21 to 29. Then, the frame-extracting module 250 extracts frames in the channel based on the extracted program information, and the frame-storage module 260 stores the extracted frame in the buffer by channels. Because frames in channel 2 have been already stored in FIG. 6A, frames in channels 20 to 29 are now stored, which is illustrated in FIG. 6B.

Then, if the user selects the number key "5", because frames in channel 25 have been stored, frames in channels 250 to 259 are stored in the remaining 10 buffers, which is illustrated in FIG. 6C.

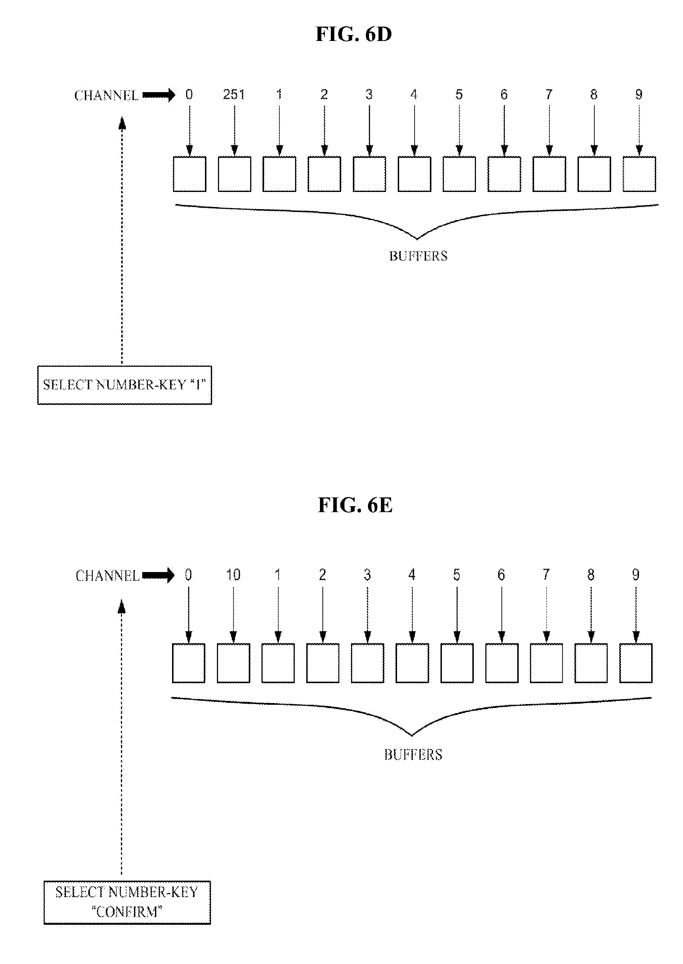

Then, if the user selects the number key "1", because frames in channel 251 have been stored, and there are channels 0 to 999, frames in channels 0 to 9 are stored in the remaining 10 buffers, which is illustrated in FIG. 6D.

Then, if the user selects "confirmation", the decoding module 270 get access to the buffer that stores frames in channel 251, decodes the stored frames, and outputs the frames through the display module 280. Further, frames in channel 10 are stored in the buffer, which is illustrated in FIG. 6E.

Further, the new channel number is determined when the user presses "confirmation", but after the user inputs the last number key, if a predetermined time period passes, the inputted number-key information can be determined as the new channel number.

FIGS. 6A to 6E illustrate the process of storing frames in other channels using 11 buffers, but the present invention is not limited to this, and any method of storing frames of certain channels or channels within a predetermined range based on the number-key information inputted by the user can be included in the range of the present invention. The information for channels corresponding to the inputted number-key information can be set in the apparatus for changing the channel.

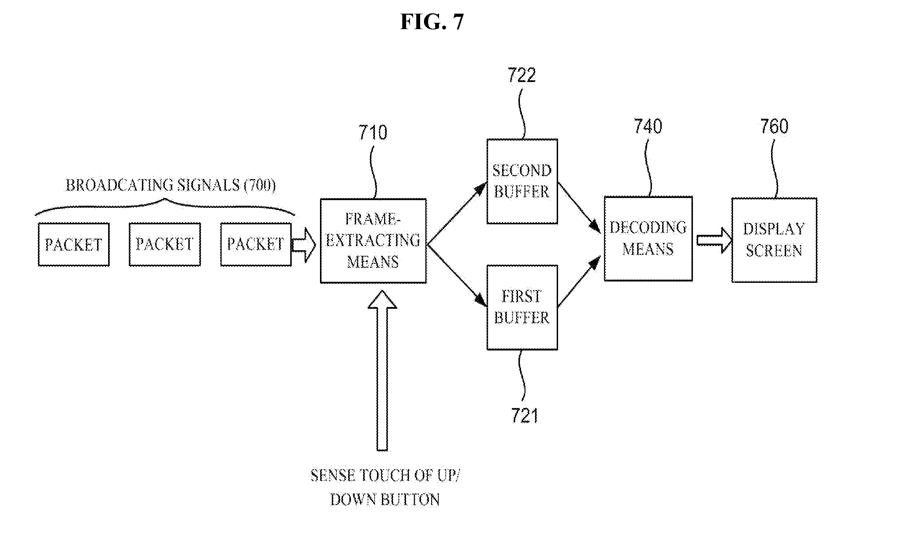

FIG. 7 illustrates the basic concept of changing a channel according to an exemplary embodiment of the present invention.

If a broadcast signal consisting of multiple packets is received, a frame-extracting means 710 extracts program information on the broadcasting program being viewed by the user based on the received packets. Then, frames constituting the program are stored in a first buffer 721 using the extracted program, a decoding means 740 decodes frames stored in the first buffer 721, and provides the broadcasting program to the user through a display screen 760.

Further, the user can press the up button or the down button on remote controller in order to change the channel. Here, if sensing information that indicates the contact is transmitted to the frame-extracting means 710, the frame-extracting means 710 extracts program information on the broadcasting program in the lower channel or the upper channel based on the sensing information, and stores frames constituting the program in a second buffer 722 using the extracted program information.

Here, in the case where the broadcast signal 700 is transmitted using MPEG-2 method, it is preferable that frames stored in the second buffer 722 are I-frames or P-frames. All frames (I-frames, B-frames, and P-frames) for the program being viewed by the current user are stored in the first buffer 721.

In the case where the user wants to view a program broadcast in the upper or lower channel by pushing the up or down button, a decoding means 740 promptly decodes frames stored in the second buffer 722 in response to the channel-change command received from the user, and provides the decoded frames through a display screen 760.

Hence, since the user stores broadcasting frames in advance, not only for the channel being viewed by the user, but also for the upper or lower channel, the channel can be quickly changed.

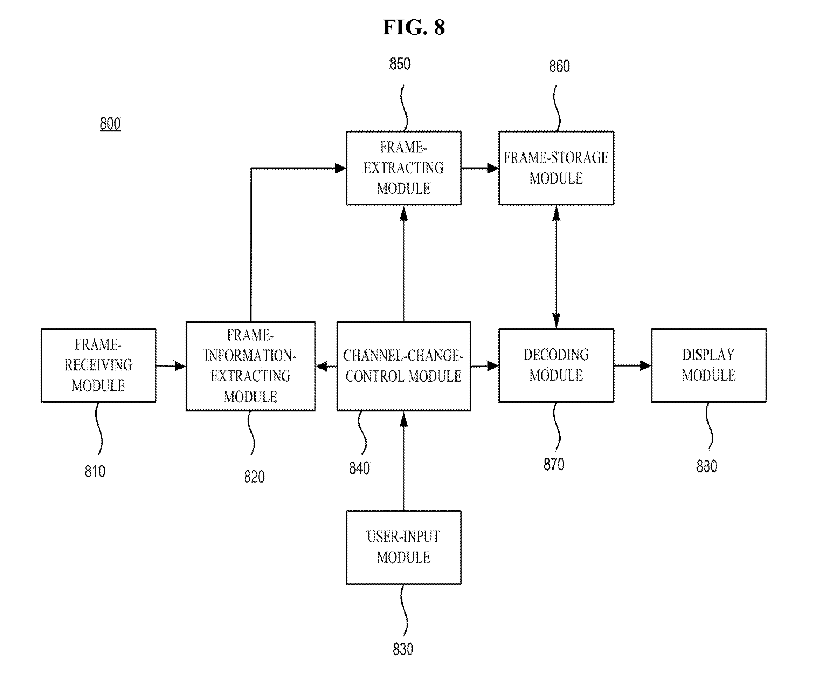

FIG. 8 is a block diagram illustrating the structure of an apparatus for changing a channel according to another exemplary embodiment of the present invention, which corresponds to the structure of the apparatus illustrated in FIG. 2.

Referring to FIG. 8, a channel-changing apparatus 800 includes a packet-receiving module 810, a program-information-extracting module 820, a user-input module 830, a channel-change-control module 840, a frame-extracting module 850, a frame-storage module 860, a decoding module 870, and a display module 880.

The packet-receiving module 810 receives broadcast signals consisting of multiple packets. Here, the received broadcast signal uses MPEG-2.

The program-information-extracting module 820 extracts program information of the current channel, and the lower channel or the upper channel based on packet-identification information that identifies the user's channel selection and each of the packets.

The user-input module 830 receives the input of the channel selection by the user. Preferably, the user-input module 830 includes an IR module. The IR module receives infrared rays transmitted by the infrared remote controller manipulated by the user, interprets the user's command from the received infrared signals, and transmits the interpreted command to the channel-change-control module 840.

The channel-change-control module 840 extracts frames constituting the broadcast content corresponding to the extracted program information. Here, in the case of the lower channel or the upper channel, the frame-extracting module 850 extracts an I-frame and a P-frame (hereinafter called "I-P frames") or two P-frames (hereinafter called "P-P frames"), respectively, or extracts only an I-frame of the lower channel or the upper channel.

The frame-storage module 860 includes a first buffer and a second buffer, and frames extracted by the frame-extracting module 850 are stored in the corresponding buffer.

Further, the operating modes of the channel-changing apparatus 800 can be divided into a first mode indicating the operation in the state where the user presses the up or down button of the remote controller before changing the channel, and a second mode indicating the operation in the case where the channel is changed as the up or down button is pushed. If the channel-changing apparatus 800 receives the channel-change command from the user while in the first mode, the mode is turned to the second mode, and if the user puts his or her finger on the up or down button of the remote controller after the operation according to the second mode is performed, the mode is turned into the first mode.

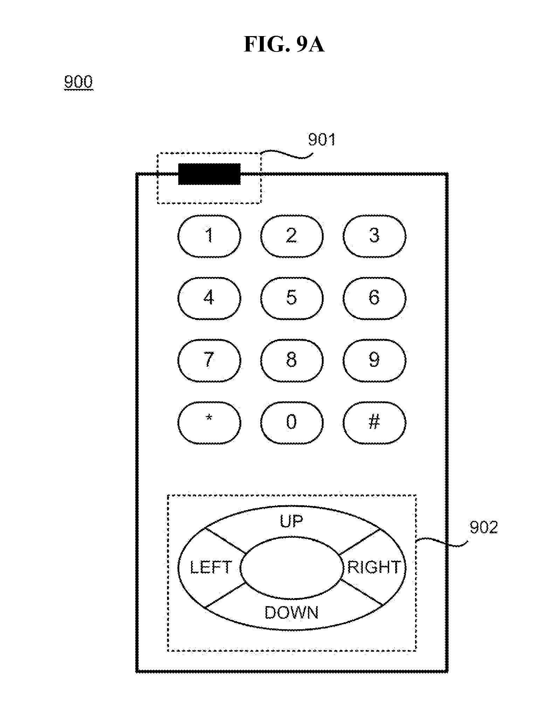

FIGS. 9A to 9B illustrate a remote controller according to another exemplary embodiment of the present invention.

FIG. 9A illustrates a remote controller 900 according to the present invention. The remote controller 900 includes a 4-way button 902 to change the channel or regulate volume. Here, a sensor to sense the contact with the user's finger is attached on the up button and the down button of the 4-way button 902.

Some examples of the sensor are a pressure sensor to sense the pressure of a finger, and a heat sensor to determine the contact of a finger by sensing body heat.

Further, in the case where the user's finger is contacted, or the up or down button is pushed, the remote controller 900 provides the information to the channel-changing apparatus 800 through the IR-transmitting module 901.

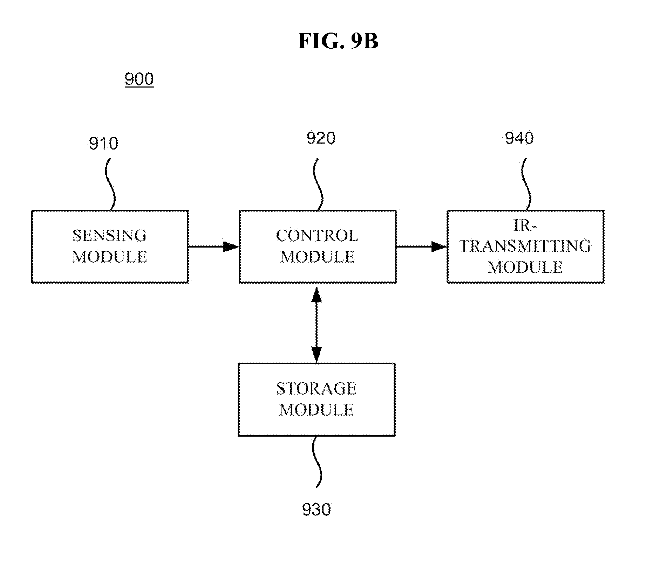

FIG. 9B illustrates the function block of the remote controller 200, and the remote controller 900 includes a sensing module 910, a control module 920, a storage module 930, and an IR-transmitting module 940.

The sensing module 910 includes a pressure sensor or a heat sensor, and senses whether the user's finger has contacted the up or down button, or whether the up or down button has been pushed.

The control module 920 receives information on the finger's contact or the button being pushed from the sensing module 910, extracts infrared key-code information corresponding to the received information, and transmits the extracted key-code to the IR-transmitting module 940.

The IR-transmitting module 940 generates infrared signals of the infrared key-code information, and transmits the generated signals to the channel-changing apparatus 800.

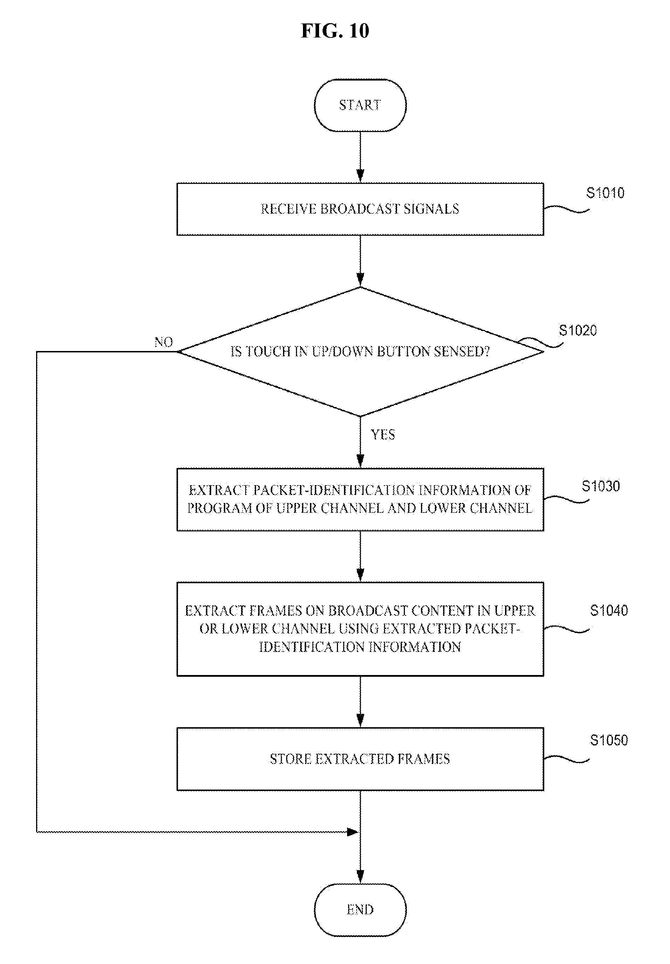

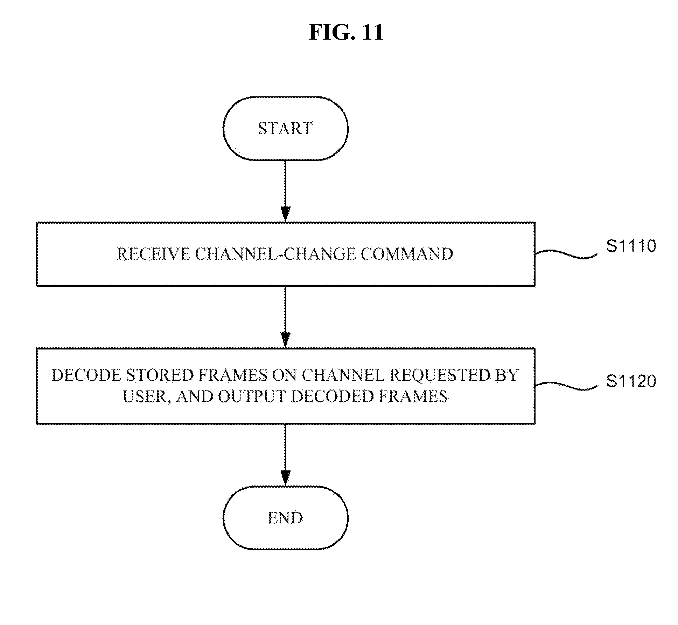

The operation between the channel-changing apparatus 800 illustrated in FIG. 8 and modules constituting the remote controller illustrated in FIG. 9B is specifically described using the flowcharts of FIGS. 10 and 11.

FIG. 10 is a flowchart illustrating the operation of a first mode according to an exemplary embodiment of the present invention.

First, the packet-receiving module 810 receives broadcast signals consisting of a plurality of packets S1010. Here, each packet includes packet-identification information that distinguishes the packet from other packets. In the case of a broadcasting stream transmitted in MPEG-2 format, the packet-identification information corresponds to the PID.

Here, the program-information-extracting module 820 extracts packet-identification information of the program for the current channel, and the frame-extracting module 850 extracts frames for the broadcast content in the current channel using the extracted packet-identification information.

The frame-storage module 860 stores the extracted frames in the first buffer, and the frames stored in the first buffer are decoded by the decoding module 870, and are outputted through the display module 880.

Here, the packet-identification information on broadcast content can be obtained through the program allocation table (PAT) and the program map table (PMT) specified in the MPEG-2 data.

For example, if the packet-identification information received by the packet-receiving module 810, i.e., the PID value, is 0, because the received packet represents the packet having PAT information, the program-information-extracting module 820 can obtain the PID of programs being broadcast in the current channel using the PMT PID information within the PAT.

Further, the PID information of the basic elementary stream (ES) necessary for the program being broadcast in the current channel can be obtained through the PMT PID information, and the basic stream includes video or audio information.

Further, if the sensing module 910 of the remote controller 900 senses that the user's finger is laid on the up or down button, the control module 920 extracts the corresponding infrared key-code information, and provides the extracted information to the infrared-rays-transmitting module 940. Then, the infrared-rays-transmitting module 940 generates infrared signals using the infrared key-code information, and then transmits the generated signals to the channel-changing apparatus 800.

The user-input module 830 of the channel-changing apparatus 800 receives the transmitted infrared signals, and recognizes that a contact has been sensed in the up or down button. As such, the channel-change-control module 840 allows the program-information-extracting module 820 to extract the packet-identification information of the program of the upper or lower channel corresponding to the up or down button S1020 and S1030.

Then, the frame-extracting module 850 extracts I-P frames, P-P frames or an I-frame among frames constituting the program of the upper or lower channel to perform the decoding, i.e., broadcast content, using the extracted packet-identification information S1040.

Frames extracted by the frame-extracting module 850 are stored in the second buffer of the frame-storage module 860 S1050, and I-P frames, P-P frames or I frame extracted by the frame-extracting module 850 are updated and stored in the second buffer. Here, the frames stored in the second buffer can be decoded by the decoding module 870, and can be stored.

FIG. 11 is a flowchart illustrating the operation of a second mode according to an exemplary embodiment of the present invention.

In the case where the up or down button is, the sensing module 910 of the remote controller 900 transmits the information to the control module 920, and the control module 920 extracts the corresponding infrared key-code information from the storage module 930 and provides the extracted information to the infrared transmission module 940. Then, the IR-transmitting module 940 generates infrared signals using the infrared key-code information, and transmits the generated signals to the channel-changing apparatus 800.

The user-input module 830 of the channel-changing module 800 receives the transmitted infrared signals, and recognizes that the up or down button has been pushed S1110. As such, the channel-change-control module 840 allows the decoding module 870 to decode frames stored in the second buffer so that the decoded frames are outputted through the display module 880 S1120.

If the frames stored in the second buffer have been decoded, the decoding process is omitted, and the decoded frames stored in the second buffer are displayed through the display module 880, by which the images in the new channel can be quickly provided to the user.

Further, the frame-extracting module 850 extracts all frames constituting broadcast content in the upper or lower channel selected by the user, and the extracted frames are stored in the second buffer of the frame-storage module 860. Here, frames of broadcast content being viewed by the user are not additionally stored in the first buffer. Hence, the existing second buffer serves as the first buffer according to the channel-change request of the user, and the existing first buffer then serves as the second buffer.

For example, in the case where there are four broadcasting channels 6, 7, 9 and 11, if the user is currently viewing channel 9, frames of channel 9 are stored in the first buffer. If the user presses the down button, the I-frame for channel 7 is stored in the second buffer. Here, if the user pushes the down button, frames stored in the second buffer are decoded and outputted, and all frames of channel 7 are stored in the second buffer, but frames of channel 9 are not additionally stored in the first buffer. Then, if the user presses the down button, the I-frame of channel 6 is stored in the first buffer. Hence, after the channel is changed, the existing first buffer serves as the second buffer, and the existing second buffer serves as the first buffer.

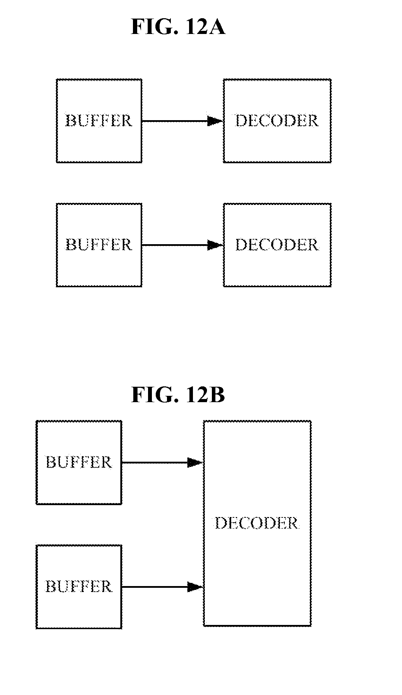

Further, the decoding module 870 illustrated in FIG. 8 can include multiple decoders, and broadcast content of both the current channel and the other channels can be replayed in the screen provided by the display module 880 through the connection between multiple buffers. Here, the user can enjoy content being broadcast in several channels at the same time. FIGS. 12A to 12B illustrate the connection between a buffer and a decoder.

The description of the channel-changing method has centered on the IPTV environment, but the method can be applied to the DTV environment.

That is, in the DTV environment where there are two tuners, when the user puts his or her finger on the up button of the remote controller, the remote controller senses it, and transmits the information to the DTV. Then, the other tuner, which is not the tuner for the channel being viewed by the user, stores frames of the broadcasting program of the upper channel in the buffer.

Then, if the user pushes the up button, the DTV promptly decodes frames stored in the buffer, and outputs the decoded frames on the screen. Hence, the channel is quickly changed.

The term "module", as used herein, means, but is not limited to, a software or hardware component, such as a Field Programmable Gate Array (FPGA) or an Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

It should be understood by those of ordinary skill in the art that various replacements, modifications and changes may be made in the form and details without departing from the spirit and scope of the present invention as defined by the following claims. Therefore, it is to be appreciated that the above described embodiments are for purposes of illustration only and are not to be construed as limitations of the invention.

According to an apparatus and method of the present invention, when a user wants to change a channel, the channel can be quickly changed, whereby images of the new channel can be quickly provided.

## Claims

1. A channel-changing method comprising:
receiving broadcast signals consisting of multiple packets;
extracting frames using packet-identification information on the packets, and storing the extracted frames by channels; and
outputting frames corresponding to the channel requested by a user among the stored frames.

2. The method of claim 1, wherein the extracted frames are frames of the current channel, the lower channel, and the upper channel.

3. The method of claim 2, wherein frames of the lower channel and the upper channel are I-frames or P-frames.

4. The method of claim 2, wherein frames of the lower channel and the upper channel are decoded, and the decoded frames are then stored.

5. The method of claim 2, further comprising:
extracting and storing frames of the lower channel of the requested channel if the requested channel is the lower channel.

6. The method of claim 2, further comprising:
extracting and storing frames of the upper channel of the requested channel if the requested channel is the upper channel.

7. The method of claim 1, wherein the broadcast signals are transmitted in MPEG-2 format, and the packet-identification information is the PID specified in MPEG-2.

8. A channel-changing method comprising:
receiving a channel-change request from a user;
outputting the stored frames on the requested channel;
extracting packet-identification information of the program for the lower or upper channel of the requested channel;
extracting frames on broadcast content corresponding to the extracted packet-identification information; and storing the extracted frames.

9. The method of claim 8, wherein frames of the lower channel or the upper channel are I-frames or P-frames.

10. The method of claim 8, wherein the storing comprises:
decoding the extracted frames; and
storing the decoded frames.

11. The method of claim 8, wherein the program is loaded on broadcast signals consisting of multiple packets, and is then transmitted.

12. The method of claim 11, wherein the broadcast signals are transmitted in MPEG-2 format, and the packet-identification information is the PID specified in the MPEG-2.

13. The method of claim 8, wherein the channel-change request is one of a change to the upper channel or a change to the lower channel.

14. A channel-changing apparatus comprising:
a packet-receiving module that receives broadcast signals consisting of multiple packets;
a frame-extracting module that extracts frames using packet-identification information on the packets;
a frame-storage module that stores the extracted frames by channels; and
a display module that outputs frames corresponding to the channel requested by a user among the stored frames.

15. The apparatus of claim 14, wherein the extracted frames are frames of the current channel, the lower channel, and the upper channel.

16. The apparatus of claim 15, wherein frames of the lower channel and the upper channel are I-frames or P-frames.

17. The apparatus of claim 15, wherein frames of the lower channel and the upper channel are decoded, and the decoded frames are then stored.

18. The apparatus of claim 15, wherein the frame-extracting module extracts frames of the lower channel of the requested channel, and the extracted frames are stored in the frame-storage module if the requested channel is the lower channel.

19. The apparatus of claim 15, wherein the frame-extracting module extracts frames of the upper channel of the requested channel, and the extracted frames are stored in the frame-storage module if the requested channel is the upper channel.

20. The apparatus of claim 14, wherein the broadcast signals are transmitted in MPEG-2 format, and the packet-identification information is the PID specified in the MPEG-2.

21. A channel-changing apparatus comprising:
a user-input module that receives a channel-change request from a user;
a display module that outputs the stored frames on the requested channel;
an information-extracting module that extracts packet-identification information of the program on the lower or upper channel of the requested channel;
a frame-extracting module that extracts frames on the broadcast content
corresponding to the extracted packet-identification information; and
a frame-storage module that stores the extracted frames.

22. The apparatus of claim 21, wherein frames of the lower channel or the upper channel are I-frames or P-frames.

23. The apparatus of claim 21, wherein the frame-storage module decodes the extracted frames and then stores the decoded frames.

24. The apparatus of claim 21, wherein the program is loaded on broadcast signals consisting of multiple packets, and is then transmitted.

25. The apparatus of claim 24, wherein the broadcast signals are transmitted in MPEG-2 format, and the packet-identification information is the PID specified in the MPEG-2.

26. The apparatus of claim 21, wherein the channel-change request is one of a change to the upper channel or a change to the lower channel.

27. A channel-changing apparatus comprising:
a channel-change-control module that controls the operation of a first mode that stores frames constituting broadcast content of the lower channel and the upper channel of the current channel while outputting broadcast content of the current channel, and a second mode that stores frames constituting broadcast content of the lower or upper channel of the requested channel while outputting the stored frames on the channel requested by a user; and
a user-input module that receives a request from the user.

28. The apparatus of claim 27, wherein frames of the lower channel and the upper channel are I-frames or P-frames.

29. The apparatus of claim 27, wherein frames of the lower channel and the upper channel are decoded, and the decoded frames are then stored.

30. The apparatus of claim 27, wherein the broadcast content is loaded on broadcast signals consisting of multiple packets distinguished by packet-identification information, and are then transmitted.

31. The apparatus of claim 30, wherein the broadcast signals are transmitted in MPEG-2 format, and the packet-identification information is the PID specified in the MPEG-2.

32. A channel-changing apparatus comprising:
a frame-extracting means that extracts frames that express broadcast content by channels from broadcast signals consisting of multiple packets;
a plurality of buffers that store the extracted frames by channels;
a decoding means that decodes frames stored in a random buffer among a plurality of buffers; and
a display screen that outputs the decoded frames.

33. A channel-changing method comprising:
receiving number-key information for changing a channel from a user;
storing frames of a plurality of channels corresponding to the received number-key information by channels;
determining a new channel number based on the received at least one set of number-key information; and
decoding the stored frames in the determined new channel number, and outputting the decoded frames.

34. The method of claim 33, wherein the stored frames are I-frames or P-frames.

35. The method of claim 33, wherein the frame expresses broadcast content by channels in broadcast signals consisting of multiple packets.

36. The method of claim 33, wherein a plurality of channels corresponding to the number-key information is within a predetermined channel range.

37. A channel-changing method comprising:
receiving broadcast signals consisting of multiple packets;
extracting frames of channels corresponding to the contact of a channel-changing means using packet-identification information of the packet; and
storing the extracted frames.

38. The method of claim 37, wherein the extracted frames are frames of the upper or lower channel of the channel being viewed by the user.

39. The method of claim 38, wherein frames of the upper channel and the lower channel are I-frames or P-frames.

40. The method of claim 37, wherein the extracted frames are decoded, and the decoded frames are then stored.

41. The method of claim 37, wherein the broadcast signals are transmitted in MPEG-2 format, and the packet-identification information is the PID specified in MPEG-2.

42. A channel-changing method comprising:
receiving broadcast signals;
extracting frames of a channel corresponding to the contact of a channel-changing means among the received broadcast signals; and
storing the extracted frames.

43. The method of claim 42, wherein the extracted frames are I-frames and P-frames.

44. The method of claim 42, further comprising:
outputting the stored frames by the selection of the contacted channel-changing means.

45. A channel-changing method comprising:
sensing the contact of a channel-changing means;
storing frames of a channel corresponding to the sensed contact; and
outputting the stored frames by the selection of the contacted channel-changing means.

46. The method of claim 45, wherein the storing comprises:
decoding the frames and then storing the decoded frames.

47. A channel-changing apparatus comprising:
a packet-receiving module that receives broadcast signals consisting of multiple packets;
a frame-extracting module that extracts frames of a channel corresponding to the contact of a channel-changing means using packet-identification information of the packets; and
a frame-storage module that stores the extracted frames.

48. The apparatus of claim 47, wherein the extracted frames are frames of the channel above or below the channel being viewed by a user.

49. The apparatus of claim 48, wherein frames of the upper channel and the lower channel are I-frames or P-frames.

50. The apparatus of claim 47, wherein the extracted frames are decoded, and the decoded frames are then stored.

51. The apparatus of claim 47, the broadcast signals are transmitted in MPEG-2 format, and the packet-identification information is the PID specified in MPEG-2.

52. A channel-changing apparatus comprising:
a frame-extracting module that extracts frames of a channel corresponding to the contact of a channel-changing means among the received broadcast signals; and
a frame-storage module that stores the extracted frames.

53. The apparatus of claim 52, wherein the extracted frames are I-frames or P-frames.

54. The apparatus of claim 52, further comprising:
a display module that outputs the stored frames by the selection of the contacted channel-changing means.

55. A channel-changing apparatus comprising:
a channel-change-control module that controls the operation of a first mode that stores frames constituting broadcast content of the lower or upper channel of the current channel corresponding to the contact of a channel-changing means while outputting broadcast content of the current content, and a second mode that outputs the stored frames by the selection of the contacted channel-changing means; and
a user-input module that receives information on the contact of the channel-changing means.

56. The apparatus of claim 55, wherein frames of the lower or upper channel are I-frames or P-frames.

57. The apparatus of claim 55, wherein the stored frames are decoded, and the decoded frames are stored.

58. The apparatus of claim 55, wherein the broadcast content is loaded on broadcast signals consisting of multiple packets distinguished by packet-identification information, and is then transmitted.

59. The apparatus of claim 55, wherein the broadcast signals are transmitted in MPEG-2 format, and the packet-identification information is the PID specified in MPEG-2.
